# EUROPEAN PATENT APPLICATION

(11) **EP 1 701 549 A2**
(43) Date of publication of application: **13.09.2006**
(21) Application number: 05110927.0
(22) Date of filing: 18.11.2005
(51) Int. Cl.: H04N 7/26, H04N 7/50

(54) **Adaptive deblocking for a video decoder**

(30) Priority: 11.03.2005 JP 2005069888
(71) Applicant: Kabushi Kaisha Toshiba, Tokyo 105-8001 (JP)
(72) Inventor: Uchida, Kosuke Toshiba Corporation Intellectual, Tokyo 105-8001 (JP); Kitada, Noriaki Toshiba Corporation Intellectual, Tokyo 105-8001 (JP); Hoshina, Satoshi Toshiba Corporation Intellectual, Tokyo 105-8001 (JP); Kikuchi, Yoshihiro Toshiba Corporation Intellectua, Tokyo 105-8001 (JP); Kawashima, Yuji, Toshiba Corporation Intellectual, Tokyo 105-8001 (JP)
(74) Representative: Henkel, Feiler & Hänzel

(57) **Abstract**

According to one embodiment, an information processing apparatus having a decoder to decode encoded streaming data to be displayed to form a picture including a plurality of blocks comprises a filtering unit (213) for filtering the decoded streaming data to reduce distortion of the block with respect to each picture, a detecting unit (211) for detecting a size of the picture to be displayed, and a simplifying unit (212) for simplifying the filtering by the filtering unit in response to the size of the picture detected by the detecting unit.

## Description

One embodiment of the invention relates to an information processing apparatus, for example a personal computer, with a decoder to decode encoded streaming data to be displayed to form a picture including a plurality of blocks.

In recent years, a personal computer provided with an audio and visual (also referred as "AV") function which is similar to an AV device such as a digital versatile disc (also referred as "DVD") player or a television set has been prevalent.

This type of a personal computer includes a software decoder to decode a compressed and encoded moving picture streaming data by means of software. Use of this software decoder makes it possible to decode the compressed and encoded streaming data by a central processing unit (also referred as "CPU") without additionally providing a dedicated hardware.

Recently, attention has been paid to H. 264/AVC standard, that AVC is an acronym of Advanced Video Coding, as a next generation technique of compressing and encoding a moving picture. The H. 264/AVC standard is a compressing and encoding technique with higher efficiency than the conventional compression and encoding technique such as MPEG2 or MPEG4. For the reasons, a large processing amount is required in each of an encoding process and a decoding process compatible with the H. 264/AVC standard in comparison with the conventional compressing and encoding technique such as MPEG2 or MPEG4.

Therefore, a personal computer designed with a decoder to decode the moving picture streaming data compressed and encoded in the H. 264/AVC standard by means of software has a greater operational load. If a system burden increases, a delay may occur with the decoding process per se, whereby playback of the moving pictures may not be performed smoothly.

On the other hand, there has been various proposals for smoothly decoding a moving picture streaming data such as promoting so called "elimination" in a range in which user's viewing is not affected. For example, the Japanese Patent Application Publication (Kokai) No. 2004-328634 discloses such a technique of eliminating a de-blocking filter process for the purpose of block noise reduction applied to a block boundary of a decoded picture in a high speed playback mode.

However, if this mode is set in the case that the picture is displayed in a normal size, a block noise in the picture will be easily recognized by a user. From the view point of the user watching the display, the less block noise recognized the better. In other words, if less block noise is recognized, then the quality of the displayed picture would become substantially higher.

The present invention has been made in view of such a circumstance. It is an object of the present invention to provide an information processing apparatus which make it possible to properly reduce a system load according to decoding a mobile image stream.

In order to achieve the object described previously, the present invention provided an information processing apparatus having a decoder to decode encoded streaming data to be displayed to form a picture including a plurality of blocks, characterized by comprising: filtering means for filtering the decoded streaming data to reduce distortion of the block with respect to each picture; first detecting means for detecting a size of the picture to be displayed; and simplifying means for adjusting filtering by the filtering means in response to alteration of the size of the picture as detected by the first detecting means.

According to the present invention, it is possible to provide an information processing apparatus which make it possible to properly reduce a system load according to decoding of a mobile image stream.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of an exemplary computer according to an embodiment of the present invention;
FIG. 2 is an exemplary block diagram showing a system configuration of the computer according to the embodiment;
FIG. 3 is an exemplary block diagram showing a functional configuration of a video playback application program for use in the computer according to the embodiment;
FIG. 4 is an exemplary block diagram showing a configuration of a software decoder performed by the video playback application program according to the embodiment;
FIG. 5 is an exemplary diagram illustrating a reference picture and a non-reference picture in the embodiment;
FIG. 6 is a table showing an exemplary stepwise simplification of a de-blocking filter process performed by the video playback application program according to the embodiment;
FIG. 7 is an exemplary flow chart showing procedures for a decode process executed by the video playback application program according to the embodiment;
FIG. 8 is an exemplary diagram showing a structure of a moving picture streaming data decoded by the video playback application program according to the embodiment; and
FIG. 9 is an exemplary diagram showing a structure of a NAL unit of the moving picture streaming data decoded by the video playback application program according to the embodiment.

Various embodiments according to the present invention will be described hereinafter with reference to the accompanying drawings. In general, according to one embodiment of the invention, an information processing apparatus having a decoder to decode encoded streaming data to be displayed to form a picture including a plurality of blocks comprises a filtering unit to filter the decoded streaming data to reduce distortion of the block with respect to each picture, a detecting unit to detect a size of the picture to be displayed, and a simplifying unit to adjust the filtering by the filtering unit in response to the size of the picture detected by the detecting unit.

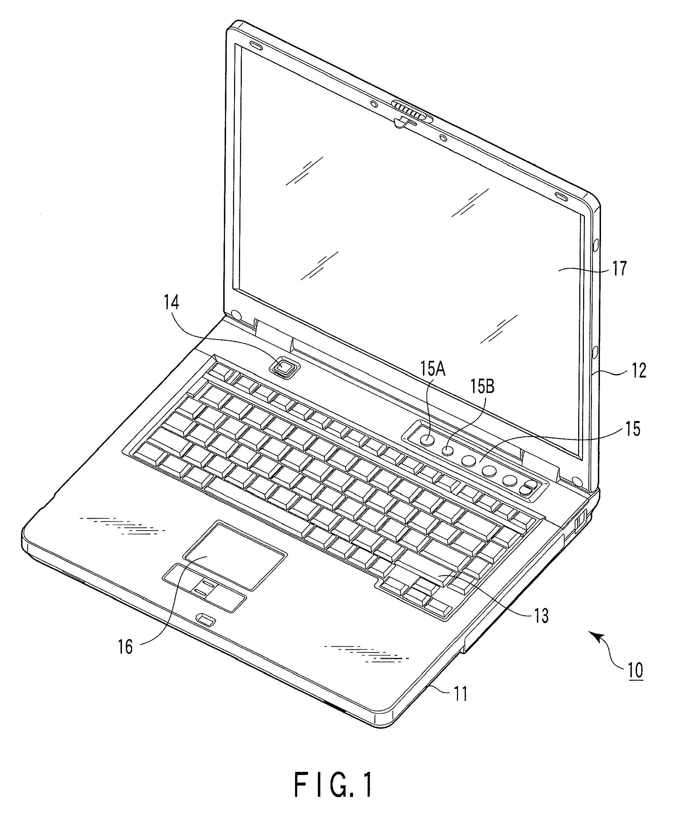

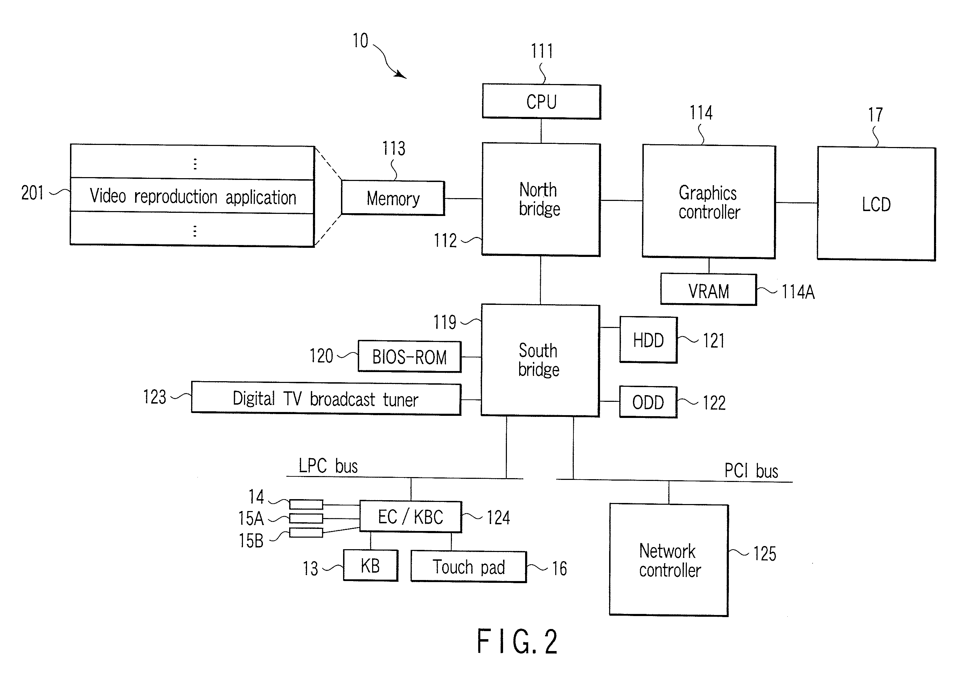

FIGS. 1 and 2 show a configuration of an information processing apparatus according to one embodiment of the present invention. The information processing apparatus is implemented as, for example, a notebook type personal computer 10.

The computer 10 is composed of a computer main body 11 and a display unit 12. FIG. 1 shows a state in which the display unit 12 of the notebook type personal computer 10 is opened. A display device composed of a liquid crystal display (also referred as a "LCD") 17 is incorporated in the display unit 12, and a display screen of the LCD 17 is positioned at a substantial center of the display unit 12.

The display unit 12 is pivotably mounted to be turned between an open position and a closed position with respect to the computer main body 11. The computer main body 11 has a box shaped housing, and on an upper face thereof, a keyboard (also referred as "KB") 13, a power button 14, an input operation panel 15, a touch panel 16 and the like for turning ON and/or OFF the power supply of the computer 10 are disposed.

The input operation panel 15 is an input device, which inputs an event corresponding to a depressed button to a system, and comprises a plurality of buttons for activating a plurality of functions, respectively. These buttons include a TV activation button 15A and a digital versatile disc (also referred as a "DVD") activation button 15B.

The TV activation button 15A is a button for activating a TV function for recording and recording broadcast program data such as a digital TV broadcast program.

Following an operation that a user depresses the TV activation button 15A, a TV application program for executing this TV function is activated. In addition, the DVD activation button 15B is a button for playback of video contents recorded in the DVD. After this button is depressed by the user, an application program for playback of video contents is automatically activated.

FIG. 2 shows a system configuration of the computer 10. The computer 10 includes a central processing unit (also referred as "CPU") 111, a north bridge 112, a main memory 113, a graphics controller 114, a south bridge 119, a BIOS-ROM 120, a hard disk drive (also referred as "HDD") 121, an optical disk drive (also referred as "ODD") 122, a digital TV broadcast tuner 123, an embedded controller/keyboard controller IC (also referred as "EC/KBC") 124, a network controller 125, and the like.

The CPU 111 is a processor provided to control an operation of the computer 10, and executes a variety of application programs such as an operating system (also referred as "OS") and a video playback application program 201 which are loaded in the main memory 113 from the HDD 121.

The video playback application program 201 is software for decoding compressed and encoded moving picture streaming data to playback it. The video playback application program 201 is a software decoder which is compatible with the H. 264/AVC standard. The video playback application program 201 has a function for decoding a moving picture streaming data compressed and encoded in an encoding system defined in accordance with the H. 264/AVC standard, such as a digital TV broadcast program received by the digital TV broadcast tuner 123 or video contents in accordance with a high definition (also referred as "HD") standard read out from the ODD 122, for example.

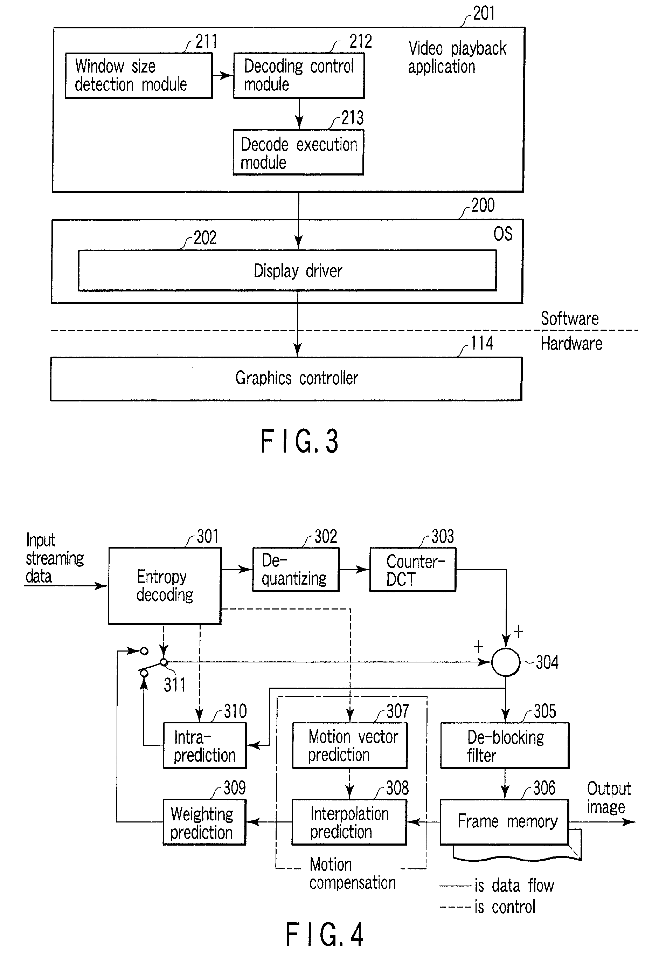

The video playback application program 201 is, as shown in FIG. 3, provided with a window size detection module 211, a decoding control module 212, and a decode execution module 213. As described above, the CPU 111 executes the video playback application program 201.

The decode execution module 213 is a decoder which executes a decode process defined in accordance with the H. 264/AVC standard. The window size detection module 211 is a module which detects a window size for the video playback application program 201 allocated on the LCD 17 in order to display a picture decoded by the decode execution module 213. In essence, this detects alteration of the size of the picture as well. The window size detection module 211 acquires size information from an OS 200 and properly detects that size, for example, in the case where a window for the video playback application program 201 is reduced or enlarged, namely, is resized.

Then, the decoding control module 212 controls the contents of a decode process performed by the decode execution module 213 in accordance with the window size for the video playback application program 201 detected by the window size detection module 211.

Specifically, the decoding control module 212 controls the contents of the decode process to be performed by the decode execution module 213 such that the decode process defined in accordance with the H. 264/AVC standard is executed by the CPU 111 in the case where the picture decoded by the decode execution module 213 is displayed in full size without being reduced. On the other hand, in the case where a picture is displayed to be reduced in size equal to or lower than 60%, for example, as compared with a full size mode, the decoding control module 212 controls the contents of the decode process to be performed by the decode execution module 213 such that at least part of the decode process defined in accordance with the H. 264/AVC standard is replaced with an eliminated and simplified process.

The moving picture streaming data decoded by the video playback application program 201 is sequentially written into a video memory (also referred as "VRAM") 114A of the graphics controller 114 via a display driver 202. In this manner, the decoded moving picture streaming data is displayed on the LCD 17. The display driver 202 is software for controlling the graphics controller 114.

Referring back to FIG. 2, the CPU 111 also executes a system BIOS, which is an acronym of Basic Input Output System, stored in the BIOS-ROM 120. The system BIOS is a program for hardware control.

The north bridge 112 is a bridge device which makes connection between a local bus of the CPU 111 and the south bridge 119. The north bridge 112 also incorporates a memory controller which access-controls the main memory 113. The north bridge 112 also has a function of executing communication with the graphics controller 114 via an accelerated graphics port (also referred as "APG") bus or the like.

The graphics controller 114 is a display controller which controls the LCD 17 which is used as a display monitor of the computer 10. The graphics controller 114 generates a display signal to be transmitted to the LCD 17 from the image data written into the VRAM 114A.

The south bridge 119 controls each device on a low pin count (also referred as "LPC") bus and each device on a peripheral component interconnect (also referred as "PCI") bus. The south bridge 119 also incorporates an integrated drive electronics (also referred as "IDE") controller for controlling the HDD 121 and the ODD 122. Further, the south bridge 119 has a function of controlling the digital TV broadcast tuner 123 and a function of access-controlling the BIOS-ROM 120.

The HDD 121 is a storage device, which stores a variety of software components and data. The ODD 122 is a drive unit for driving storage media such as a DVD in which video contents are stored. The digital TV broadcast tuner 123 is a receiver device for externally receiving broadcast program data such as a digital TV broadcast program.

According to one embodiment, the EC/KBC 124 is a 1-chip microcomputer in which an embedded controller for power management and a keyboard controller for controlling the KB 13 and the touch pad 16 are integrated. The EC/KBC 124 has a function of turning ON/OFF the power supply of the computer 10 in response to a user's operation of the power button 14. Further, the EC/KBC 124 may turn ON the power supply of the computer 10 in response to a user's operation of the TV activation button 15A and the DVD activation button 15B.

The network controller 125 is a communication device which executes communication with an external network such as, for example, the Internet.

Now, referring to FIG. 4, a functional configuration of the software decoder implemented by the video playback application program 201 will be described.

The decode execution module 213 of the video playback application program 201 is compatible with the H. 264/AVC standard, and as illustrated, includes an entropy decoding section 301, a de-quantizing section 302, a de-discrete cosine transform section (also referred as "counter-DCT section") 303, an adder section 304, a de-blocking filter section 305, a frame memory 306, a motion vector prediction section 307, an interpolation prediction section 308, a weighting prediction section 309, an intra-prediction section 310, and a mode change switch section 311.

Orthogonal transform of the H. 264 is integer precision, and is different from a conventional DCT. However, this transform is referred to as DCT herein.

Encoding of each picture (also referred as "screen") is executed in macro-block units of, for example, 16 x 16 pixels. Either one of an intra-frame encoding mode (also referred as "intra-encoding mode") or a motion compensation inter-frame prediction encoding mode (also referred as "inter-encoding mode") may be selected on a macro-block by macro-block basis.

In the motion compensation inter-frame prediction encoding mode, a motion compensation inter-frame prediction signal corresponding to a picture targeted for encoding is generated in a defined shape unit by estimating a motion from an already encoded picture. Then, a prediction error signal obtained by subtracting the motion compensation inter-frame prediction signal from the picture targeted for encoding is encoded by means of the DCT, quantizing, and entropy encoding.

In addition, in the intra-encoding mode, a prediction signal is generated from the picture targeted for encoding, and the prediction signal is encoded by means of the DCT, quantizing, and entropy encoding.

In order to further improve a compression rate, the CODEC compatible with the H. 264/AVC standard utilizes techniques such as:
(1) motion compensation of pixel precision which is higher than a conventional MPEG, namely 1/4 pixel precision;
(2) intra-frame prediction for efficiently performing intra-frame encoding;
(3) de-blocking filter for reducing block distortion;
(4) integer DCT in 4 x 4 pixel unit;
(5) multi-reference frame in which a plurality of pictures at an arbitrary position are available for use as reference pictures; and
(6) weighting prediction.

Hereinafter, an operation of the software decoder of FIG. 4 will be described.

The moving picture streaming data compressed and encoded in accordance with the H. 264/AVC standard is first inputted to the entropy decoding section 301. The compressed and encoded moving picture streaming data includes motion vector information employed in motion compensation inter-prediction encoding; intra frame prediction information employed in intra-prediction encoding; and mode information indicative of a prediction mode which is inter-prediction encoding or intra-prediction encoding, as well as encoded picture information.

A decode process is executed in macro-block units of, for example, 16 x 16 pixels. The entropy decoding section 301 applies an entropy decoding process such as variable length decoding to a moving picture streaming data, and de-multiplexes a quantized DCT coefficient, motion vector information which is motion vector differential information, intra-frame prediction information, and mode information from the moving picture streaming data. In this case, for example, each macro-block contained in a picture targeted for decoding is subjected to an entropy decoding process on a block by block basis of 4 x 4 (or 8 x 8 pixels), and each block is converted to a quantizing DCT coefficient of 4 x 4 (or 8 x 8 pixels). In the foregoing, a case in which each block is 4 x 4 is presumed.

The motion vector information is sent to the motion vector prediction section 307. The intra-frame prediction information is sent to the intra-prediction section 310. The mode information is sent to the mode change switch section 311.

The 4 x 4 quantizing DCT coefficient of each block targeted for decoding is converted into a 4 x 4 DCT coefficient which is orthogonal transform coefficient, in accordance with a de-quantizing process using the de-quantizing section 302. The 4 x 4 DCT coefficient is converted into a 4 x 4 pixel value from frequency information in accordance with a counter-integer DCT process which is counter-orthogonal transform process, using the de-DCT part 303. The 4 x 4 pixel value is a prediction error signal which corresponds to a block targeted for decoding. The prediction error signal is sent to the adder section 304, and then, a prediction signal which is either motion compensation inter-frame prediction signal or intra-frame prediction signal, corresponding to a block targeted for decoding is added, whereby the 4 x 4 pixel value corresponding to the block targeted for decoding is decoded.

In the intra-prediction mode, the intra-prediction section 310 is selected by the mode change switch section 311, whereby the intra-frame prediction signal from the intra-prediction section 310 is added to the prediction error signal. In the inter-prediction mode, the weighting prediction section 309 is selected by the mode change switch section 311, whereby the motion compensation inter-frame prediction signal obtained by the motion vector prediction section 307, the interpolation prediction section 308, and the weighting prediction section 309 is added to the prediction error signal.

In this manner, the prediction signal which is either motion compensation inter-frame prediction signal or intra-frame prediction signal is added to a prediction error signal which corresponds to a picture targeted for decoding, and a process for decoding the picture targeted for decoding is executed in predetermined block units.

Each of the decoded pictures is stored in the frame memory 306 after a de-blocking filter process has been applied by the de-blocking filter section 305. The de-blocking filter section 305 applies a de-blocking filter process for reducing a block noise to each of the decoded pictures in block units of 4 x 4 pixel in this embodiment.

The de-blocking filter process includes block distortion in a reference picture, thereby preventing the block distortion from being transmitted to an encoded picture. A processing load for the de-blocking filter process is quite substantial, and may occupy fifty (50) percent of all the processing conducted by the software decoder. The de-blocking filter process is adaptively executed so that stronger filtering is applied to a part at which block distortion is likely to occur, and weak filtering is applied to a part at which the block distortion is unlikely to occur. The de-blocking filter process is achieved by a loop filter process.

Then, each of the de-blocking filter processed pictures is read out as an output picture (image) frame or an output picture (image) field from the frame memory 306. In addition, each of the reference pictures to be used as a reference picture for motion compensation inter-frame prediction is maintained for a predetermined period of time in the frame memory 306. In the motion compensation inter-frame prediction encoding in accordance with the H. 264/AVC standard, a plurality of pictures may be used as a reference picture. Thus, the frame memory 306 is provided with a plurality of frame memory parts for storing pictures (images) for a plurality of pictures.

The motion vector prediction section 307 generates motion vector information on the basis of the motion vector differential information corresponding to a block targeted for decoding. The interpolation prediction section 308 generates a motion compensation inter-frame prediction signal from a pixel group of integer precision and a predictive interpolation pixel group of 1/4 pixel precision contained in a reference picture on the basis of the motion vector information corresponding to a block targeted for decoding.

Generation of a prediction interpolation pixel of 1/4 pixel precision is achieved by first generating 1/2 picture (image) by using a 6-tap filter which is 6 inputs and 1 output, and then employing a 2-tap filter. Therefore, although a prediction interpolation process of high precision considering up to a high frequency component may be performed, a large quantity of processing is required for motion compensation.

The weighting prediction section 309 generates a weighted motion compensation inter-frame prediction signal by executing in units of motion compensation blocks a process for multiplying a weighting coefficient for the motion compensation inter-frame prediction signal. The weighting prediction is a process for predicting brightness of a picture targeted for decoding. By means of the weighting prediction process, the quality of a picture (image) whose brightness changed with an elapse of time may be improved, as is a fade-in or fade-out. However, a quantity of processing required for the software decoder increases concurrently.

The intra-prediction section 310 is intended to generate, from a picture targeted for decoding, an intra-frame prediction signal in a block targeted for decoding included in the picture. The intra-prediction section 310 executes a intra-frame prediction process in accordance with the intra-frame prediction information described previously, and generates an intra-frame prediction signal from a pixel value contained in another block which has been already decoded, the block being proximal to the block targeted for decoding, the block existing in the same picture as the block targeted for decoding. The intra-frame prediction is a technique of enhancing a compression rate by utilizing a pixel correlation between blocks.

In the intra-frame prediction, for example, in the case of 16 x 16 pixels, one of 4 types of prediction modes including vertical prediction which is prediction mode 0, horizontal prediction which is prediction mode 1, average value prediction which is prediction mode 3, and plane prediction which is prediction mode 4 is selected in units of intra-frame prediction blocks in accordance with intra-frame prediction information. Although a frequency at which plane prediction is selected is lower than another intra-frame prediction mode, a quantity of processing required for plane prediction is larger than that of any other intra-frame prediction mode.

In the present embodiment, attention is paid to the fact that, even if image quality degradation occurs frequently, such a quality degradation is hardly recognized from a viewer if a window is resized to be reduced as compared with a case of making display in full size.

In other words, if a window is resized to be reduced, the improvement of the image quality by the de-blocking filter 305 is smaller. Therefore, in such a case, even if the de-blocking filter 305 may be simplified or eliminated, the viewer may hardly recognize the quality degradation and the processing load may be reduced.

In this embodiment, in order to reduce a load on the computer 10, all of the decode processes (hereinafter, referred to as "normal decode processes") explained in FIG. 4 including a de-blocking filter process and a specific decode process are selectively performed in accordance with a window size for the video playback application program 201. The specific decode process is a decode process which eliminates or simplifies at least part of the de-blocking filter process from the normal decode processes.

Elimination or simplification of the de-blocking filter process in this specific de-blocking process mode is controlled in a stepwise manner according to, for example, what percentage a window is reduced to by a resize process. Specifically, control is made such that, as the display size is reduced, an elimination quantity of the de-blocking filter process increases. In this case, the compensation motion inter-frame prediction signal corresponding to the picture targeted for decoding is generated by using as a reference picture one or more decoded pictures before subjected to the de-blocking filter process instead of a picture subjected to the de-blocking filter process.

As a method for eliminating or simplifying the de-blocking filter process (hereinafter, also referred "elimination method"), apart from a general skip of always disabling the de-blocking filter process relevant to a decoded picture, the following two elimination methods are provided, and these methods are properly combined with each other, thereby achieving stepwise control.

(Elimination method 1) A non-reference picture de-blocking filter process is disabled.

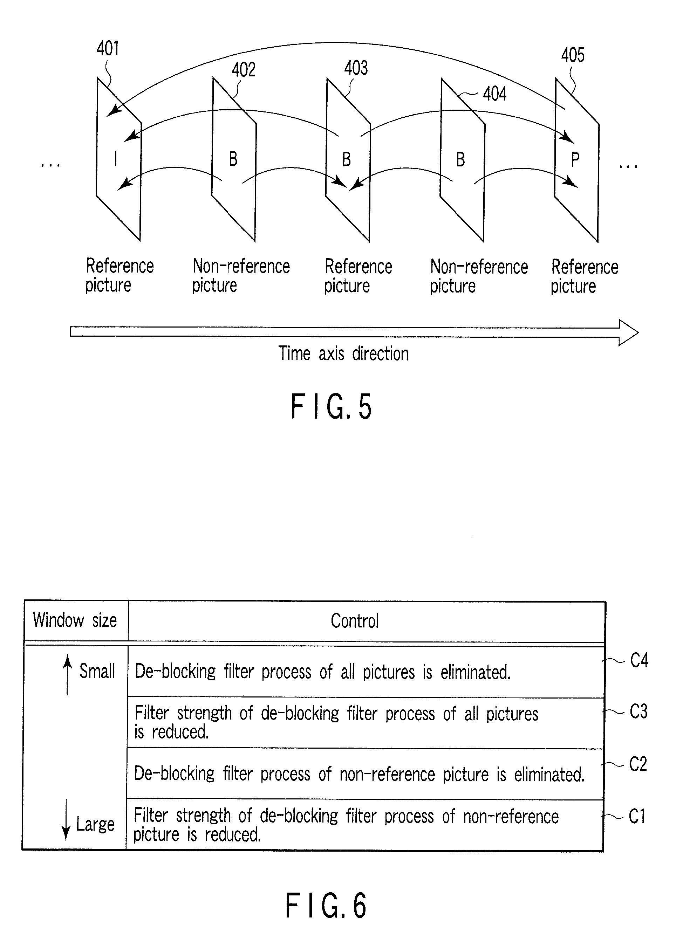

First, with referring to FIG. 5, a description will be given with respect to a reference picture and a non-reference picture which are included in a moving picture streaming data.

A variety of pictures included in a moving picture streaming data before decode processing are inputted to the software decoder (see FIG. 4) in a predetermined sequence, and processes such as motion compensation inter-frame prediction and intra-frame prediction are applied. Here, a case is assumed in which an I-picture 401, a B-picture 402, a B-picture 403, a B-picture 404, and a P-picture 405 are inputted to the software decoder in this sequence, and processed.

P-picture is a picture for performing motion compensation inter-frame prediction by referring to one picture. B-picture is a picture for performing motion compensation inter-frame prediction by referring to two pictures. I-picture is a picture for performing intra frame prediction independently by only the intra-picture without referring to a past picture or a future picture.

The I-picture 401 shown in FIG. 5 is referred to by the B-pictures 402, 403, and 405, although another picture is referred to. The B-picture 403 refers to the I-picture 401 and the P-picture 405 and is referred to by the B-pictures 402 and 405. In addition, the P picture 405 refers to the I-picture 401 and is referred to by the B-pictures 403 and 404. In this manner, at the time of inter-frame prediction, the pictures 401, 403, and 405 referred to by another picture fall into a "reference picture".

On the other hand, the B-picture 402 shown in FIG. 5 refers to the I-picture 401 and the B-picture 403, but is not referred to by another picture. The picture 404 refers to the B-picture 403 and the P picture 405, but is not referred to by another picture. In this manner, at the time of inter-frame prediction, the B-pictures 402 and 404 which are not referred to by another picture fall into a "non-reference picture".

Namely, a non-reference picture is a picture which is not utilized as a reference picture at the time of making motion compensation, and thus, a de-blocking filter process is eliminated or simplified for only such a picture. Thereby, it is possible to avoid accumulating an error caused by disabling or simplifying the de-blocking filter process.

To identify whether or not a non-reference picture is displayed, nal_ref_idc of a network abstraction layer (also referred as "NAL") unit described later may be used. The NAL is a part of syntax information contained in the moving picture streaming data. In the case that the nal ref idc is zero (0), it means that picture is a non-reference picture. Thus, the de-blocking filter process of that picture is eliminated or simplified.

(Elimination method 2) A filter strength of a de-blocking filter process is reduced.

The filter strength is determined by Boundary Strength (also referred as "bs" or "block boundary strength") existing in each block boundary. A value of "bs" in each block boundary is uniquely calculated from an attribute of each pixel targeted for filtering. The "bs" takes a value of 0, 1, 2, 3, or 4. In the case that the "bs" is 0, no filter processing is performed. In the case of 4, the strongest filter processing is performed, and a computation quantity increases concurrently. Therefore, in this embodiment, when an actual "bs" value is 1, 2, or 3, it is handled that bs = 0, and the filter processing is performed without filter processing. In this condition, substantial elimination is performed. On the other hand, when an actual "bs" value is 4, a normal process is performed with filter processing. By this method, an entire computation quantity may be reduced.

FIG. 6 shows an exemplary control achieved by combining the above-described elimination methods. In this embodiment, the processing quantity or computation quantity of the de-blocking filter process is controlled so as to be eliminated in a stepwise manner as follows in response to the window size for the video playback application program 201.

For example, in a state in which the window size has been reduced to be equal to or smaller than a first percentage of a full window size (e.g., 60% of a full window size), a control mode C1 for reducing the strength of the de-blocking filter process relevant to a non-reference picture is applied. Further, in a state in which the window size has been reduced to be equal to or smaller than a second percentage of a full window size (e.g., second percentage is less than the first percentage, such as 50%), a control mode C2 for eliminating the de-blocking process with respect to a non-reference picture is applied. Furthermore, in a state in which the window size is reduced to equal to or smaller than a third percentage of a full window size (e.g., then third percentage is less than the first or second percentages, such as 40%), a control mode C3 for reducing the strength of the de-blocking filter process relevant to a full picture is applied. Moreover, in a state in which the window size is reduced to be equal to or smaller than a fourth percentage of a full window size (e.g., fourth percentage is less than the first, second or third percentages, such as 30%), a control mode C4 for eliminating the de-blocking filter process relevant to the full screen is applied. Of course, the selected percentages may be altered from those shown above to establish different or additional window size constraints for control modes C1-C4.

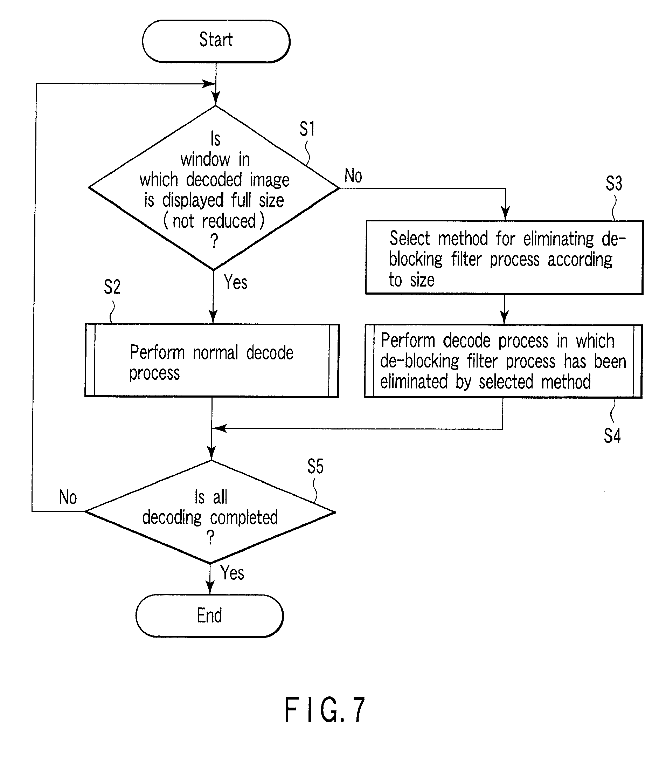

Now, referring to the flow chart of FIG. 7, a description will be given with respect to procedures for decode processing executed by the video playback application program 201.

The video playback application program 201 monitors whether or not the display window is reduced on the basis of information acquired from the OS 200 during a period of executing a decode process (block S1). If no reduction is made (YES in block S1), the video playback application program 201 selects the previously described normal decode process as a decode process to be executed by the CPU 111, thereby executing a series of processes described in FIG. 4 on the CPU 111 (block S2).

On the other hand, if reduction is made (NO in block S1), the video playback application program 201 selects the previously described specific decode process as a decode process to be executed by the CPU 111, and first, selects a method for eliminating a de-blocking filter process according to that size (block S3). Then, the video playback application program 201 executes on the CPU 111 a series of processes explained in FIG. 4 in which at least part of the de-blocking filter process has been eliminated by the selected elimination method (block S4). In this case, a decoded image before being subjected to the de-blocking filter process is stored in the frame memory 306, and the motion compensation inter-frame prediction signal corresponding to the picture targeted for decoding is generated from one or more decoded pictures before subjected to the de-blocking filter process.

Although there is a possibility that an image including block distortion is outputted by eliminating or simplifying execution of the de-blocking filter process, the process required for software decoding per picture is remarkably lowered.

Then, the processing in the blocks S1 to S4 described previously is repeatedly executed until decoding of all the moving picture streaming data is completed (block S5). Thus, if the display window is resized during this block, the method for eliminating or simplifying the de-blocking filter process is switched in accordance with the window state after resized or switching from a specific decode process to a normal decode process or from a normal decode process to a specific decode process is performed.

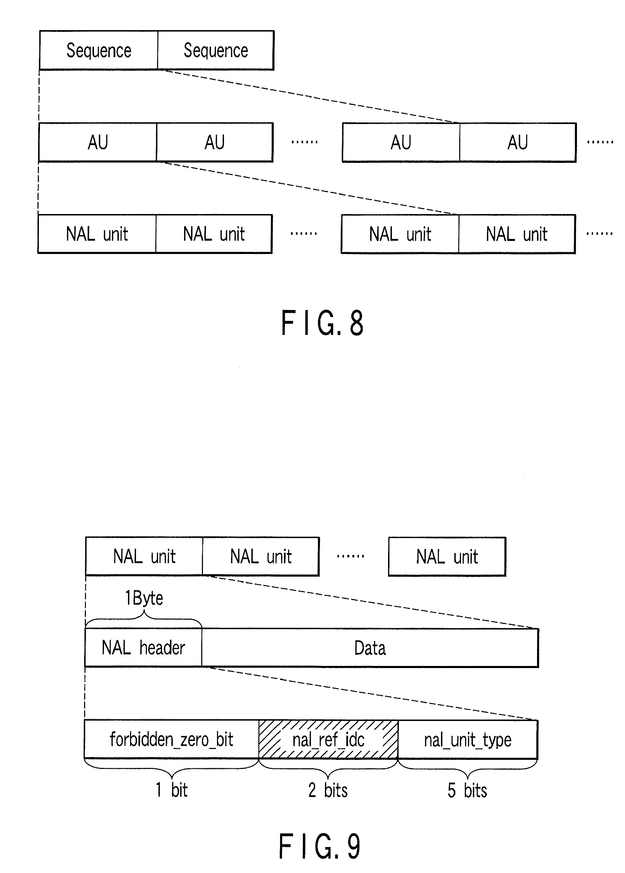

A structure of the H. 264 sequence is composed of a plurality of access units (also referred as "AU") as shown in FIG. 8. Each access unit corresponds to one picture. Each access unit is composed of a plurality of NAL units (generally a plurality of blocks of data or "blocks"). Each NAL unit is divided into a header part and a data part, as shown in FIG. 9. Then, the video playback application program 201 determines whether or not a picture targeted for decoding is a non-reference picture according to whether or not the value is 0 as described previously by referring to nal_ref_idc included in a header of the NAL unit shown in FIG. 9.

As described above, according to the present embodiment, attention is paid to the fact that, even if image quality degradation occurs frequently, the quality degradation is hardly recognized if a window is resized to be reduced as compared with a case of making a display in full size. Thus, at least part of the de-blocking filter process requiring a large quantity of processing is eliminated or simplifying, and reduction of a system load is achieved.

The foregoing embodiment has described the fact that a filter process is performed as if bs = 0 which is substantially eliminated, when the actual bs value is 1, 2, or 3, as an example of eliminating part of the de-blocking filter process by reducing the filter strength. However, for example, part of the de-blocking filter process may be simplified so as to reduce a computation quantity by reducing these values one by one, for example.

Further, since the decoding control process described previously is achieved by all the computer programs, the computer program is merely introduced into a general computer through a computer-readable storage medium, thereby making it possible to easily achieving advantageous effect similar to those of the present embodiment.

The software decoder according to the present embodiment may be applied to PDA, a portable telephone set or the like without being limited to a personal computer. Also, a device or apparatus to decode moving picture streaming data may be separated from a display to display the decoded moving picture.

Furthermore, instead of the software decoder, a hardware decoder may be applied.

Namely, the present invention is not limited to the above-described embodiment, and constituent elements may be embodied by modifying them without departing from the spirit of the invention at the stage of embodiment. In addition, a variety of inventions may be formed in accordance with a proper combination of a plurality of constituent elements disclosed in the above embodiment. For example, some of all the constituent elements presented in the embodiments may be deleted. Further, the constituent elements across the different embodiments may be properly combined with each other.

## Claims

1. An information processing apparatus having a decoder to decode encoded streaming data to be displayed to form a picture including a plurality of blocks, **characterized by** comprising:
filtering means (213) for filtering the decoded streaming data to reduce distortion of the block with respect to each picture;
first detecting means (211) for detecting a size of the picture to be displayed; and
simplifying means (212) for adjusting filtering by the filtering means in response to alteration of the size of the picture as detected by the first detecting means.

2. An information processing apparatus according to claim 1, **characterized in that** the simplifying means adjusting the filtering in a stepwise manner when the size of the picture detected by the first detecting means is decreased.

3. An information processing apparatus according to claim 1, **characterized by** further comprising a second detecting means for detecting a non-reference picture which is not referred to by another picture.

4. An information processing apparatus according to claim 3, **characterized in that** the simplifying means only adjusts the filtering applied to the non-reference picture.

5. An information processing apparatus according to claim 3, **characterized in that** the second detecting means detects the non-reference picture on the basis of syntax information included in the streaming data.

6. An information processing apparatus according to claim 3, **characterized in that** the simplifying means adjusts the filtering with respect to a block boundary in which a value of block boundary strength uniquely calculated from an attribute of each pixel is smaller than a reference value, from among block boundaries contained the detected non-reference picture.

7. An information processing apparatus according to claim 1, **characterized in that** the simplifying means adjusts the filtering with respect to a block boundary in which a value of block boundary strength uniquely calculated from an attribute of each pixel is smaller than a reference value, from among block boundaries contained in each picture.

8. An information processing apparatus according to claim 7, **characterized in that** the simplifying means eliminates the filtering by setting the value of block boundary strength to zero.

9. An information processing apparatus according to claim 1, **characterized in that** the filtering means sets one of filter strength determined by block boundary strength uniquely calculated from an attribute of each pixel with respect to block boundaries contained in each picture.

10. An information processing apparatus according to claim 9, **characterized in that** the simplifying means lowers the filter strength set in the filtering means.

11. An information processing method with decoding of encoded streaming data to form a picture including a plurality of blocks, **characterized by** comprising:
filtering (S2, S4) the decoded streaming data to reduce distortion of a block of the picture;
detecting (S1) a window size associated with the picture to be displayed;
adjusting (S3) the filtering in response to the window size detected.

12. An information processing method according to claim 11, **characterized by** further comprising detecting whether the picture is a non-reference picture, being a picture that is not referred to by another picture, and adjusting the filtering only for the non-reference picture.

13. An information processing method according to claim 11, **characterized in that** the adjusting of the filtering is conducted in a stepwise manner when the window size detected for the picture to be displayed is decreased.

14. An information processing method according to claim 13, **characterized in that** the adjusting of the filtering includes reducing a strength of a de-blocking filter process applied to the picture when the picture is a non-reference picture and when the window size is reduced to be less than or equal to a first percentage of a full sized window.

15. An information processing method according to claim 14, **characterized in that** the adjusting of the filtering further includes eliminating the de-blocking filter process applied to the non-reference picture when the window size is reduced to be less than or equal to a second percentage of a full sized window, the second percentage of the full sized window being smaller in size than the first percentage of the full sized window.

16. An information processing method according to claim 15, **characterized in that** the adjusting of the filtering further includes reducing the strength of the de-blocking filter process applied to the picture, regardless whether the picture is a reference picture or a non-reference picture, when the window size is reduced to be less than or equal to a third percentage of a full sized window, the third percentage of the full sized window being smaller in size than the first percentage of the full sized window and the second percentage of the full sized window.

17. An information processing method according to claim 16, **characterized in that** the adjusting of the filtering includes eliminating the de-blocking filter process applied to the picture, regardless whether the picture is a reference picture or a non-reference picture, when the window size is reduced to be less than or equal to a fourth percentage of the full sized window, the fourth percentage of the full sized window being smaller in size than the first percentage of the full sized window, the second percentage of the full sized window and the third percentage of the full sized window.

18. An information processing method according to claim 11, **characterized in that** the adjusting of the filtering further includes reducing a strength of a de-blocking filter process applied to the picture when the window size is reduced to be less than or equal to a first percentage of a full sized window.

19. An information processing method according to claim 18, **characterized in that** the adjusting of the filtering further includes eliminating the de-blocking filter process applied to the picture when the window size is reduced to be less than or equal to a second percentage of the full sized window, the second percentage of the full sized window being smaller than the first percentage of the full sized window of the full sized window.

20. A program for causing a computer to execute a decode process for decoding encoded streaming data, **characterized by** comprising:
a procedure of causing the computer to execute a filtering process for reducing block distortion with respect to each decoded picture;
a procedure of causing the computer to execute a detection process for detecting a size of a window in which the picture is to be displayed; and
a procedure of causing the computer to execute the filtering process in response to the display size of the window detected.
